# EUROPÄISCHE PATENTSCHRIFT

(11) **EP 1 606 525 B1**
(45) Veröffentlichungstag und Bekanntmachung des Hinweises auf die Patenterteilung: **02.01.2008**
(21) Anmeldenummer: 04721138.8
(22) Anmeldetag: 17.03.2004
(51) Int. Cl.: F16C 33/10, F16C 33/14, F16C 33/24

(54) **SINTERGLEITLAGER MIT KONTINUIERLICHER VARIATION DER BOHRUNGSVERDICHTUNG**
POROUS PLAIN BEARING WITH CONTINUOUS VARIATION OF THE BOREHOLE COMPRESSION
PALIER LISSE FRITTE AYANT UNE COMPRESSION D'ALESAGE A VARIATION CONTINUE

(30) Priorität: 22.03.2003 DE 10312873
(43) Veröffentlichungstag der Anmeldung: 21.12.2005
(73) Patentinhaber: GKN Sinter Metals GmbH, 42477 Radevormwald (DE); ROBERT BOSCH GMBH, 70469 Stuttgart-Feuerbach (DE)
(72) Erfinder: VOGT, Andreas, 71272 Renningen (DE); DORNHÖFER, Gerd, 71229 Leonberg (DE); KOCH, Hans-Peter, 70435 Stuttgart (DE); STEHR, Werner, 72160 Horb-Ahldorf (DE); MESSNER, Christina, 39031 Bruneck (DE); KRONBICHLER, Peter, 39031 Reischach/Bruneck (DE); GOLLER, Kurt, 39031 St. Georgen/Bruneck (DE); HECHER, Heinrich, 39030 Antholz Mittertal (DE)
(74) Vertreter: Maxton Langmaack & Partner
(86) Internationale Anmeldenummer: PCT/EP2004/002729
(87) Internationale Veröffentlichungsnummer: WO 2004/083662

(56) Entgegenhaltungen:
- DE-A- 3 922 052
- US-A- 3 445 148
- US-A- 4 290 655
- US-A- 5 120 140
- US-A- 5 945 050
- US-A1- 2003 206 670
- US-B1- 6 270 259

## Beschreibung

Die Erfindung betrifft ein Sintergleitlager für Motoren und Getriebe.

Sintergleitlager werden vielfach in Motoren und Getrieben eingesetzt, wobei diese kostengünstig in der Herstellung und einfach in der Anwendung sind. Die Grenzen der Einsatzbereiche von konventionellen Sinterlagern sind durch die maximalen Radiallasten vorgegeben, wobei diese Radiallasten von den anderen Parametern der Lagerung abhängen, wie beispielsweise den Sintermaterialien, Gleitgeschwindigkeiten, Schmierstoffen, Betriebstemperaturen etc.. Im Gegensatz zu Sintergleitlagern können Massivgleitlager in der Regel bei höheren Radiallasten und Gleitgeschwindigkeiten eingesetzt werden, da der zwischen der Welle und dem Lager aufgebaute Schmierfilm die beiden Reibpartner auch bei hohen Lasten trennen kann. Dies funktioniert bei Sintergleitlagern nur bedingt, da der Schmierstoff bei entsprechend hohen Drücken in die Poren des Sintermaterials gepreßt wird. Hierdurch kann es zum Festkörperkontakt zwischen Lager und Welle, zu erhöhter Reibung, erhöhtem Verschleiß und letztendlich dem Ausfall des Sintergleitlagers kommen.

Aus dem Stand der Technik ist u. a. ein Sintergleitlager gemäß der DE 199 37 567 bekannt, welches eine Lagerbohrung mit über den Umfang verteilt abwechselnd hochverdichteten, kleinporigen Laufflächen und axial verlaufenden niedrigverdichteten, offenporigen Schmierstoffdepots aufweist, wobei die Schmierstoffdepots durch Rillenstrukturen mit mindestens zwei Längsrillen gebildet sind. Nachteilig sind derartige Sintergleitlager dahingehend, daß bei bestimmten Betriebszuständen es zu einer vergleichsweise starken Geräuschentwicklung kommt und weil im Betrieb der Ölfilm an der Rille abgestreift werden kann und hierdurch die Versorgung des Lagerspaltes mit Schmierstoff nicht mehr sichergestellt ist.

Dieses gilt auch für ein Sintergleitlager nach der DE 199 47 462, bei der die Rillen in einem spitzen Winkel zur Mittelachse der Lagerbohrung geneigt sind. Auch die DE 101 07 485 zeigt ein Sintergleitlager mit den vorstehend genannten Nachteilen.

Ein Sintergleitlager mit einer geschlossenenporigen Bereiche ist auch aus dem Dokument US-A-3445148 bekannt.

Bei entsprechenden Sintergleitlagern gemäß dem Stand der Technik weisen die Laufflächen im Betrieb eine sogenannte hydrodynamische Schmierung auf, wobei sich aufgrund des sich aufbauenden Druckes ein trennender Schmierstoffilm zwischen der Welle und dem Lager bildet. Im Bereich der offenporigen Zonen wird jedoch der Schmierstoffilm in die offenen Poren des Sintermaterials gepreßt, so daß die Welle in diesen Bereichen im sogenannten Mischreibungszustand betrieben wird. In diesem Betriebszustand sind u. a. die Reibung als auch der Verschleiß des Lagers höher als beim hydrodynamischen Betrieb.

Aufgabe der Erfindung ist es, die Vorteile der Massivlager (kleine Reibungszahlen, hohes Lasttragevermögen, hohe Gleitgeschwindigkeiten) mit Sintergleitlagern anzunähern unter Beibehaltung der Vorteile der Sintergleitlager (Lebensdauer, Schmierung durch den im Sintermaterial deponierten Schmierstoff).

Die Aufgabe wird erfindungsgemäß gelöst durch ein Sintergleitlager für Motoren und Getriebe mit den Merkmalen des Anspruchs 1. die hoch verdichteten Bereiche wirken als Laufbahn für eine in der Lagerbohrung gelagerte Welle oder Achse. In den hoch verdichteten Bereichen sind die Poren zwischen den Pulverteilchen annähernd oder ganz verschlossen, so daß die erfindungsgemäßen Sintergleitlager ähnlich zu Massivlagern bei zumindest höheren Radiallasten und Gleitgeschwindigkeiten als konventionelle Sintergleitlager eingesetzt werden können, da der Schmierstoff bei hohen Drücken nicht zwischen die Poren des Sintermaterials im den hoch verdichteten Bereichen gedrückt werden kann. Im Unterschied zu Sintergleitlagern nach dem Stand der Technik wird bei niedrigeren Drehzahlen schon eine hydrodynamische Schmierung erreicht. Somit können die erfindungsgemäßen Sintergleitlager bei niedrigen Drehzahlen eingesetzt werden bei denen bekannte Sintergleitlager noch im Mischreibungszustand laufen, wodurch ein höherer Verschleiß auftritt. Ein Festkörperkontakt zwischen Lager und Welle, der zu erhöhter Reibung, erhöhtem Verschleiß und letztendlich zum Ausfall des Lagers führen würde, wird somit verhindert. Des weiteren können im Unterschied zu Sintergleitlagern nach dem Stand der Technik niedrig viskosere Öle eingesetzt werden, da das Öl in den hoch verdichteten Bereichen nicht in die nahezu geschlossenen Poren eindringen kann. Hierdurch werden insbesondere die Eignung von Sintergleitlagern für den Kaltstart erhöht, da bei niedrigen Temperaturen um ca. -40° C und dem Einsatz von hoch viskosen Ölen bei Standardsintergleitlagern eine gute Funktion nicht gewährleistet ist. Trotz des Einsatzes niedrig viskoser Öle wird ein ausreichendes Lasttragvermögen erzielt. Die vorhandenen niedrig oder nicht verdichteten Bereiche weisen die Vorteile der bekannten Sintergleitlager auf, daß in den Poren Schmierstoff eindringen kann, so daß die niedrig verdichteten Bereiche auch als Schmierstoffdepots wirken. Somit wird eine Lebensdauerschmierung durch den im Sintermaterial deponierten Schmierstoff ermöglicht. Die Inhomogenitäten der Laufbahn bezüglich der hohen und niedrigen Verdichtung beeinträchtigt die Schmierstoffversorgung des Lagerspaltes nicht und vor allem haben diese Inhomogenitäten keine Auswirkung auf die Lastrichtungsneutralität des Lagers. Erfindungsgemäß ist vorgesehen, daß der Lagerbohrungsdurchmesser der hoch und niedrig verdichteten Bereiche zumindest annähernd identisch ist, worunter zu verstehen ist, daß keine aus dem Stand der Technik in Form von Rillen oder Nuten vorliegende Schmierstoffdepots vorgesehen sind. Eventuelle Unterschiede des Lagerbohrungsdurchmessers der hoch und niedrig verdichteten Bereiche ergeben sich aus Fertigungstungenauigkeiten und liegen im Bereich von üblichen Rundheitsfehlern. Dadurch, daß der Lagerbohrungsdurchmesser nahezu annähernd identisch ist, kann der Schmierfilm aufgrund einer kontinuierlichen Veränderung des Durchmessers nicht an einer Stufe abreißen, wie dieses bei Sintergleitlagern nach dem Stand der Technik erfolgen kann.

In vorteilhafter Ausgestaltung der Erfindung ist vorgesehen, daß der Lagerbohrungsdurchmesser der hoch und niedrig verdichteten Bereiche identisch ist. Eine derartige Ausgestaltung der Erfindung hat den Vorteil, daß keine Stufe zwischen niedrig verdichteten und hoch verdichteten Bereichen besteht, so daß ein Abstreifen des Schmierstoffilms an der Stufe bzw. Kante zwischen der Lauffläche und dem Schmierstoffdepot nicht stattfinden kann. Hierdurch wird die Betriebsicherheit und Lebensdauer des Lagers erhöht.

In der Ausgestaltung der Erfindung ist vorgesehen, daß die Dichte über den Umfang der Lagerbohrung zwischen den hoch und niedrig verdichteten Bereiche zumindest annähernd kontinuierlich variiert ist. In den niedrig verdichteten Bereichen entspricht die Dichte zumindest annähernd der Grunddichte des Lagers. Im Bereich höchster Dichte sind nahezu alle Poren geschlossen, so daß an der Bohrungsoberfläche die nahezu volle Dichte des Werkstoffs erreicht wird. Von der Bohrung aus nach außen hin nimmt die Dichte wieder ab, bis sie nach einigen Zehntel mm wieder den Wert der Grunddichte des Lagers erreicht. Das erfindungsgemäße Sintergleitlager weist eine kontinuierliche Variation der Verdichtung im Bereich der Lagerbohrung zwischen dem hoch und niedrig verdichteten Bereichen auf, wobei die Variation der Verdichtung von der Art des Bohrungsprofils und dem Umfang der Materialverdrängung abhängt. Wesentlich ist, daß keine sprunghafte Änderung der Verdichtung zwischen den hoch und niedrig verdichteten Bereichen stattfindet, welches bei den aus dem Stand der Technik bekannten Sintergleitlagern der Fall ist.

In weiterer vorteilhafter Ausgestaltung der Erfindung ist vorgesehen, daß das Sintergleitlager wenigsten zwei hoch verdichtete zumindest annähernd geschlossenporige Bereiche aufweist. Besonders vorteilhaft ist es, wenn die Anzahl so bemessen ist, daß eine ausreichende Funktionalität des Sintergleitlagers für alle Lastrichtungen gegeben ist. Die erfindungsgemäßen Sintergleitlager weisen den Vorteil auf, daß das ganze Sintergleitlager als Schmierstoffdepot wirkt, da Öl in den Poren eingelagert ist und in den niedrig verdichteten Bereichen austreten kann.

In vorteilhafter Ausgestaltung der Erfindung ist vorgesehen, daß die Bohrung zumindest über einen Teil der Lagerbreite hoch verdichtete zumindest annähernd geschlossenporige Bereiche und/oder niedrig verdichtete, offenporige Bereiche aufweist. Die hoch verdichteten und niedrig verdichteten Bereiche können von einem Lagerrand bis zu dem gegenüberliegenden Lagerrand gehen oder nur über einen Teil der Lagerbreite. Die Breite der hoch verdichteten Bereiche und ihr Abstand zueinander kann variabel sein. Die Abstände und Breiten müssen im einem Lager auch nicht konstant sein, sondern können zum Beispiel statistisch variiert werden.

In besonders vorteilhafter Ausgestaltung der Erfindung ist vorgesehen, daß die Bohrung zumindest über die halbe Lagerbreite hoch verdichtete zumindest annähernd geschlossenporige Bereiche und/oder niedrig verdichtete, offenporige Bereiche aufweist. Eine Variation der Verdichtung in axialer Richtung und nicht nur in Umfangsrichtung ist vorteilhaft, da durch die inhomogene Verdichtung über den Bohrungsumfang Bereiche mit unterschiedlichem Lasttragevermögen entstehen, d.h. hohes Tragvermögen in den stark verdichteten Bereichen, etwas geringeres Tragvermögen in den niedrig verdichteten Bereichen. Hierdurch wird in Abhängigkeit der Funktionsfähigkeit des Sinterlagers von der Lasttragrichtung verhindert. In Hinblick auf sogenannte Kantenläufer ist es besonders vorteilhaft, wenn die Anzahl der Verdichtungszonen ungerade ist, damit nicht koaxial eingebaute Wellen am Lagerrand nicht ausschließlich auf niedrig verdichteten Bereichen aufliegen. Es hat sich auch gezeigt, daß durch eine ungerade Anzahl an Verdichtungszonen das Geräuschverhalten des Lagers besser ist als bei einer geraden Anzahl von Verdichtungszonen.

In weiterer vorteilhafter Ausgestaltung der Erfindung ist vorgesehen, daß die hoch verdichteten zumindest annähernd geschlossenporige Bereiche und die niedrig verdichteten, offenporigen Bereiche gegeneinander versetzt angeordnet sind.

In besonders vorteilhafter Ausgestaltung der Erfindung ist vorgesehen, daß jeweils einem hoch verdichteten zumindest annähernd geschlossenporigen Bereich ein niedrig verdichteter, offenporiger Bereich axial gegenüberliegend zugeordnet ist. Bei in axialer Richtung versetzten Verdichtungszonen, bei denen ein hoch verdichteter Bereich einem niedrig verdichteten Bereich gegenüber liegt, kommt eine im Lager liegende Welle immer auf einem hoch verdichteten Bereich zu liegen.

Die Aufgabe wird auch gelöst durch ein Verfahren zur Herstellung eines Sintergleitlagers gemäß Ansprüchen 8 und 9. Hierbei ist es vorteilhaft, wenn keine Materialverdrängung im Kalibrierprozeß in die niedrig verdichteten Bereiche erfolgt. Die Dichte in den niedrig verdichteten Bereichen entspricht hier der Grunddichte des Lagers, beispielsweise 6,0 g/cm³ für ein Eisenlager. Die maximale Materialverdrängung findet im Bereich höchster Dichte statt, wobei es das Ziel ist alle Poren zu schließen. Damit erreicht man an der Bohrungsoberfläche die nahezu volle Dichte des Werkstoffs. Von der Bohrung aus nach außen hin nimmt die Dichte wieder ab, bis sie nach einigen Zehntel mm wieder den Wert der Grunddichte des Lagers erreicht. Bei einem erfindungsgemäßen Sintergleitlager mit einem Bohrungsdurchmesser von 8 mm erfolgt eine Materialverdrängung im Kalibrierprozeß in radialer Richtung um ungefähr 100-300 µm. Diese Werte können noch an den Werkstoff oder an den Bohrungsdurchmesser angepaßt werden. Durch das erfindungsgemäße Verfahren wird ein Sintergleitlager mit einer kontinuierlichen Variation der Verdichtung im Bereich der Lagerbohrung erzeugt, wobei die Variation und Stärke der Verdichtung von der Art des Bohrungsprofils und dem Umfang der Materialverdrängung abhängt.

Der erfindungsgemäße Formdorn ist in Umfangsrichtung sinusförmig profiliert und die erfindungsgemäßen Ober- und Unterstempel besitzen ein identisches Profil. Hierdurch erhält man eine in Umfangsrichtung variierende Bohrungsgeometrie des Grünlings. Das sinusförmige Profil weißt dabei an den tiefsten Stellen einen Fußkreis (kleinster Lagerbohrungsdurchmesser) und an den höchsten Stellen einen Kopfkreis (größter Lagerbohrungsdurchmesser) auf. Die Differenz zwischen dem Durchmesser des Fußkreises und des Kopfkreises des sinusförmigen Profils ergibt den Verdrängungsgrad des Materials beim Kalibrieren. Der Durchmessers des Kalibrierdornes wird über die Maßschwankungen beim Sintern an den Kopfkreis des Bohrungs-Profils des Grünlings angepaßt. Damit werden jene Zonen in der Bohrung verdichtet, deren Durchmesser kleiner als der Kopfkreisdurchmesser ist und eine Verdichtung im Bereich des Fußkreises findet nicht oder nur sehr gering statt. An der Stelle höchster Verdichtung sind nahezu alle Poren verschlossen.

In vorteilhafter Ausgestaltung der Erfindung ist vorgesehen, daß Pulver in ein Werkzeug eingefüllt wird, ein Grünling mit einer Bohrung mit einem annähernden Sinusprofil in Umfangsrichtung mittels Pressen erzeugt wird, wobei auf jeder Hälfte des Lagers ein um einen Winkel gegen das andere Sinusprofil versetztes Sinusprofil gepreßt wird, der Grünling gesintert wird und abschließend das annähernde Sinusprofil der Bohrung mittels Kalibrieren zu einer kreisrunden Bohrungsgeometrie geformt wird.

In besonders vorteilhafter Ausgestaltung der Erfindung ist vorgesehen, daß das Pulver in den niedrig verdichteten Bereichen annähernd auf die Grunddichte des Sintergleitlagers verdichtet wird und in den hoch verdichteten Bereichen annähernd auf die Dichte des Lagerwerkstoffes. Hierdurch wird erreicht, daß die Poren im niedrig verdichteten Bereich offen bleiben, so daß Schmierstoff eingelagert werden kann. Das Tränken des Lagers mit Schmierstoffen kann beispielsweise unter Vakuum erfolgen.

In weiterer vorteilhafter Ausgestaltung der Erfindung ist vorgesehen, daß das Pulver in radialer Richtung um 100 bis 300 µm verdichtet wird. Hierdurch wird ein zumindest annähernd vollständiges Verschließen der Poren in den hoch verdichteten Bereichen erreicht.

Die Aufgabe wird auch gelöst durch eine Vorrichtung zur Herstellung eines Sintergleitlagers und zur Durchführung des erfindungsgemäßen Verfahrens, wobei ein Preßwerkzeug vorgesehen ist, daß aus einer Matrize und einem auf dem Außenumfang profilierten Formdorn besteht, dem ein Ober- und ein Unterstempel mit einem identischen Profil zugeordnet ist, wobei die Profilierung des Dorns und der Stempel ein Sinusprofil in Umfangsrichtung ist.

In besonders vorteilhafter Ausgestaltung der Erfindung ist vorgesehen, daß ein Preßwerkzeug vorgesehen ist, daß aus einer Matrize und einem auf dem Außenumfang profilierten oberen und unteren Formdorn besteht, denen ein Ober- und ein Unterstempel mit einem identischen Profil zugeordnet ist, wobei die Profilierung ein Sinusprofil in Umfangsrichtung ist und der obere Formdorn und der Oberstempel um einen Winkel gedreht gegenüber dem unteren Formdorn und dem Unterstempel angeordnet sind.

Die Erfindung wird anhand schematischer Zeichnungen von Ausführungsbeispielen dargestellt. Es zeigen:
- Fig. 1: ein Sintergleitlager nach dem Stand der Technik,
- Fig. 2: Lagerbohrung eines erfindungsgemäßen Sintergleitlagers nach dem Sintern,
- Fig. 3: Lagerbohrung eines erfindungsgemäßen Sintergleitlagers nach dem Kalibrieren,
- Fig. 4: Abwicklung einer Lagerbohrung mit unterschiedlich verdichteten Zonen ohne axiale Variationen,
- Fig. 5: Abwicklung einer Lagerbohrung mit unterschiedlich verdichteten Zonen mit überlappender axialer Variation,
- Fig. 6: Abwicklung einer Lagerbohrung mit unterschiedlich verdichteten Zonen mit nicht überlappender axialer Variation,
- Fig. 7: ein Schnitt durch eine erfindungsgemäße Preßvorrichtung im Füllzustand und
- Fig. 8: ein Schnitt durch eine erfindungsgemäße Preßvorrichtung im Ausstoßzustand.

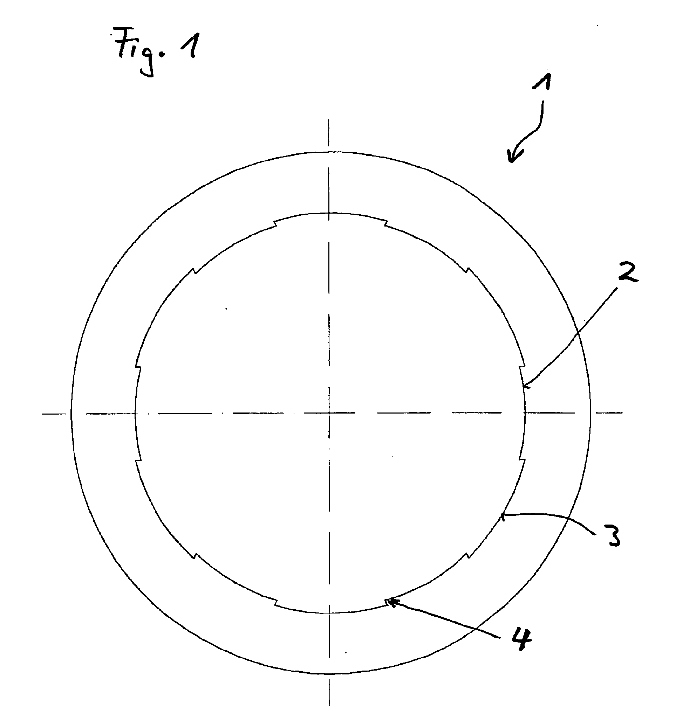

Fig. 1 zeigt ein Sintergleitlager 1 nach dem Stand der Technik, beispielsweise der DE 199 37 567, der DE 199 47 462 und DE 101 07 485, wobei zwischen den hochverdichteten Bereichen 2 und den niedrigverdichteten Bereichen 3 ein Übergang mit einer Stufe 4 ist, wobei die Stufe dahingehend nachteilig ist, daß im Betrieb der Ölfilm an der Stufe 4 abgestreift werden kann und dann die Versorgung des Lagerspaltes mit Schmierstoff nicht mehr sichergestellt ist.

Fig. 2 zeigt die Lagerbohrung 14 des erfindungsgemäßen Sintergleitlagers 5 nach dem Sintern. Das sinusförmige Profil 6 der Lagerbohrung 14 wird im Formprozeß eingebracht und weist dabei an den tiefsten Stellen einen Fußkreis 7 (kleinster Lagerbohrungsdurchmesser) und an den höchsten Stellen einen Kopfkreis 8 (größter Lagerbohrungsdurchmesser) auf. Die Differenz zwischen dem Durchmesser des Fußkreises 7 und des Kopfkreises 8 des sinusförmigen Profils 6 ergibt den Verdrängungsgrad des Materials beim Kalibrieren. Der Durchmessers des Kalibrierdornes wird über die Maßschwankungen beim Sintern an den Kopfkreis 8 des Bohrungs-Profils des Grünlings angepaßt. Damit werden jene Zonen in der Bohrung verdichtet, deren Durchmesser kleiner als der Kopfkreisdurchmesser 8 ist und eine Verdichtung im Bereich des Fußkreises 7 findet nicht oder nur sehr gering statt. An der Stelle höchster Verdichtung sind nahezu alle Poren verschlossen.

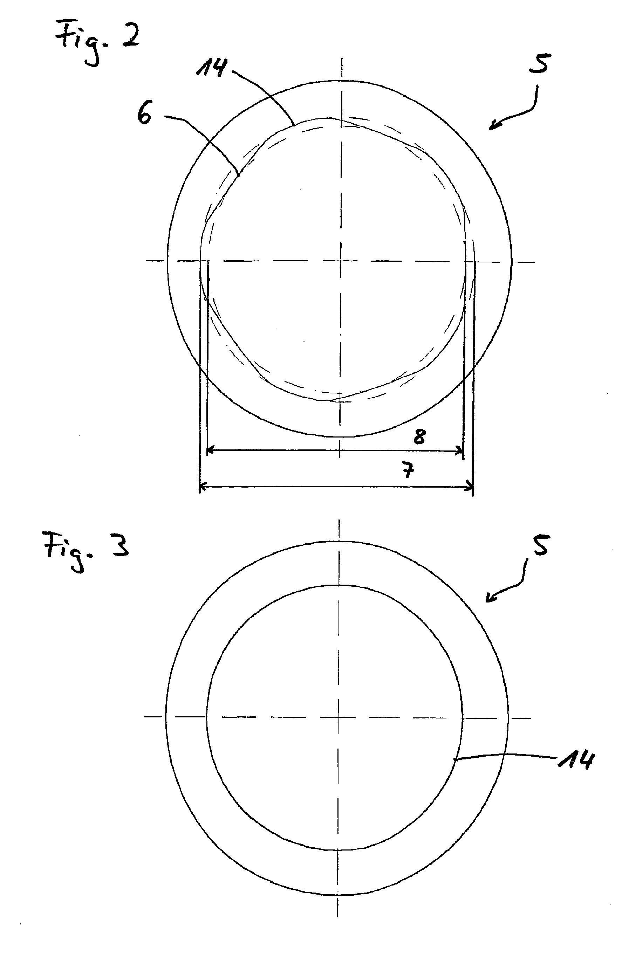

Fig. 3 zeigt die Lagerbohrung 14 des erfindungsgemäßen Sintergleitlagers 5 nach dem Kalibrieren, wobei das sinusförmige Profil 6 der Lagerbohrung 14 gemäß Fig. 2 durch das Kalibrieren zu einer kreisrunden Lagerbohrung 14 umgeformt wurde.

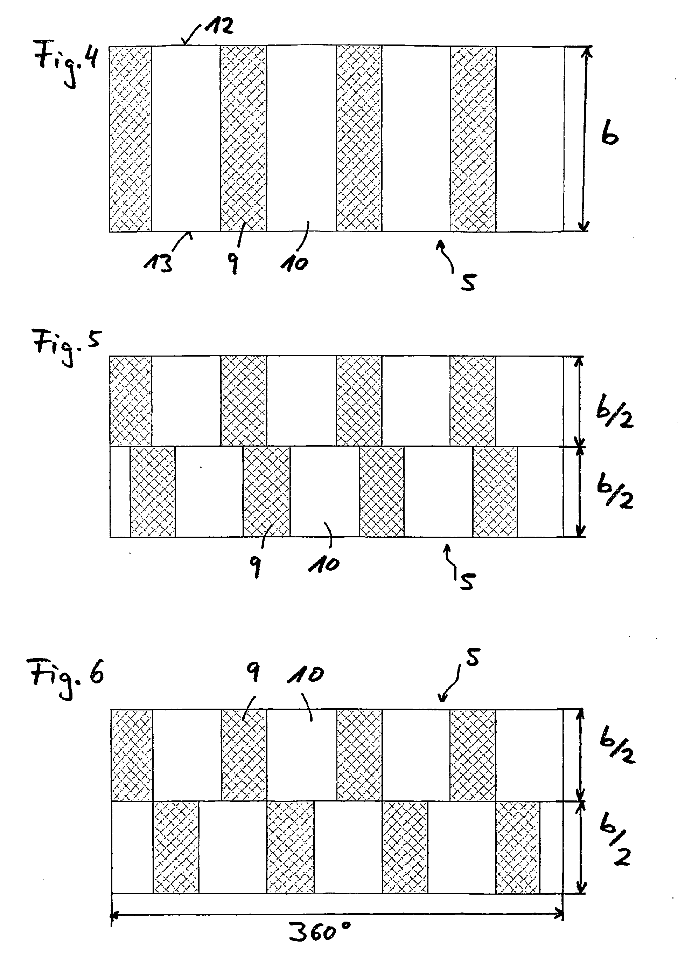

Fig. 4 zeigt die Abwicklung der erfindungsgemäßen Lagerbohrung 14 mit unterschiedlich verdichteten Bereichen 9, 10, wobei die schraffierten Bereiche die höher verdichteten Zonen 10 darstellen. Die niedrigverdichteten Bereiche 11 sind unschraffiert. Die Zonen mit der unterschiedlichen Verdichtung gehen vom oberen 12 zum unteren Lagerrand 13.

Fig. 5 zeigt die Abwicklung der erfindungsgemäßen Lagerbohrung 14 mit unterschiedlich verdichteten Bereichen 9, 10 wobei ab der Hälfte der Lagerbreite b die Verdichtungszonen um einen beliebigen Winkel gegeneinander verdreht sind. Hierdurch kann sichergestellt werden, daß eine im Lager 5 liegende nicht dargestellte Welle auf einer Lagerhälfte immer auf einem hochverdichteten Bereich 9 zu liegen kommt.

Fig. 6 zeigt eine Abwicklung der erfindungsgemäßen Lagerbohrung 14 mit unterschiedlich verdichteten Bereichen 9, 10, wobei sich die hoch- bzw. niedrig verdichteten Bereiche 9, 10 in axialer Richtung im Gegensatz zu Fig. 5 nicht mehr überlappen. Die Breite der höher verdichteten Bereiche 9 und ihr Abstand zueinander kann variabel sein. Die Abstände und Breiten müssen im einem Lager 5 auch nicht konstant sein, sondern können zum Beispiel statistisch variiert werden. Die minimale Breite der niedrigverdichteten Bereiche 10 wird durch fertigungstechnische Grenzen vorgegeben. Wenn die Anzahl der Bereiche erhöht und der Bohrungsdurchmesser verkleinert wird, so wird mehr Material beim Kalibrieren in den Bereichen niedriger Dichte verschoben. Dies führt im Extremfall zu einem Porenverschluß. Hierdurch ergibt sich, daß die minimale Breite so gewählt werden muß, daß in dem gewünschten niedrig verdichteten Bereichen 10 die Poren nicht verschlossen werden, um die Funktionalität als Schmierstoffdepot zu erhalten. Beispielsweise sollte bei einem Bohrungsdurchmesser von 8 mm der Abstand zwischen zwei Punkten höchster Verdichtung in Umfangsrichtung nicht weniger als 3,5 mm betragen.

Bedingt dadurch, daß keine Materialverdrängung im Kalibrierprozeß in dem niedrigverdichteten Bereich erfolgen soll, entspricht die Dichte im niedrigverdichteten Bereich 10 der Grunddichte des Lagers 5, beispielsweise 6,0 g/cm³ für ein Eisenlager.

Die maximale Materialverdrängung findet im Bereich höchster Dichte 10 statt, wobei das Ziel ist, daß alle Poren geschlossen werden. Hierdurch wird an der Bohrungsoberfläche die nahezu volle Dichte des verwendeten Werkstoffs erzielt. Von der Bohrung aus nach innen nimmt die Dichte wieder ab, bis sie nach einigen Zehntel Millimetern wieder den Wert der Grunddichte des Lagers erreicht. Beispielsweise erfolgt bei einem Bohrungsdurchmesser von 8 mm eine Verdrängung des Materials von 100 bis 300 µm während des Kalibrierprozesses in radialer Richtung.

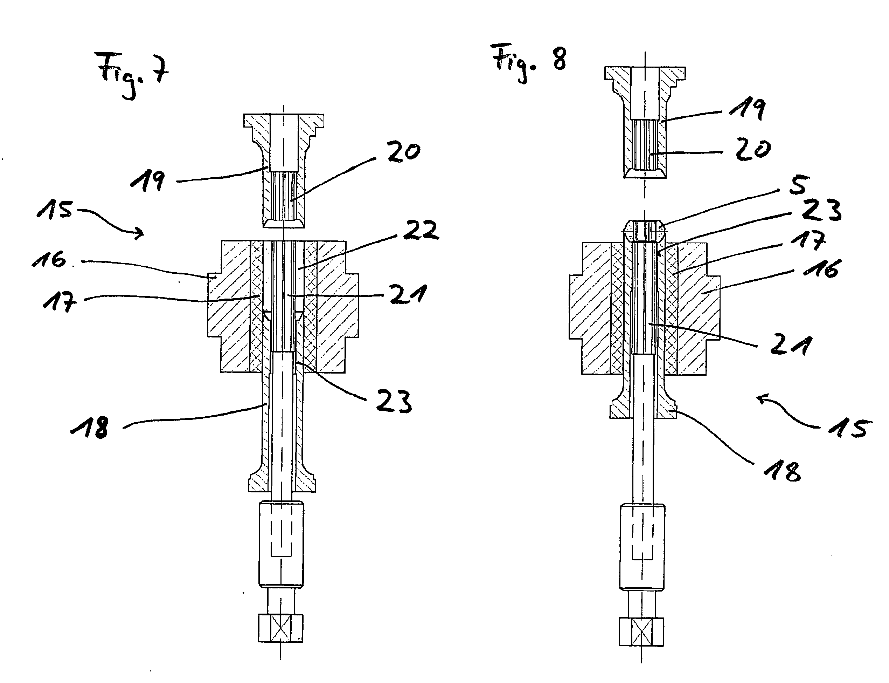

Fig. 7 zeigt ein Schnitt durch eine erfindungsgemäße Preßvorrichtung 15 im Füllzustand. Die Preßvorrichtung 15 besteht aus einer Matrize 16 mit einem Hartmetalleinsatz 17. Ferner ist ein Unterstempel 18 und ein Oberstempel 19 vorgesehen, wobei der Unterstempel 18 eine Bohrung 23 und der Oberstempel 19 eine Bohrung 20 mit einem sinusförmigen Profil aufweist. Dem Unterstempel 18 und dem Oberstempel 19 ist ein Formdorn 21 zugeordnet, der ein identisches sinusförmiges Profil aufweist. Im Füllzustand wird Pulver in den Formraum 22 eingefüllt, der durch den Hartmetalleinsatz 17, den Unterstempel 18 und den Formdorn 21 gebildet wird. Auf den Oberstempel 19 und/oder den Unterstempel 18 wird Preßdruck aufgebracht, so daß das Pulver zu einem Grünling verdichtet wird, welcher bedingt durch das sinusförmige Profil des Formdorns 21, des Unterstempels 18 und des Oberstempels 19 eine Lagerbohrung 14 mit einem entsprechenden sinusförmigen Profil 6 aufweist.

Fig. 8 zeigt ein Schnitt durch eine erfindungsgemäße Preßvorrichtung 15 beim Ausstoßen des fertig gepreßten Grünlings, der eine Lagerbohrung 14 gemäß Fig. 2 aufweist. Beim Ausstoßen wird der Oberstempel 19 aus der Matrize zurückgezogen und der Grünling mittels des Unterstempels 18 ausgestoßen. Der Grünling wird anschließend gesintert, wobei ggf. entstandene Grate anschließend entfernt werden.

Bei der Herstellung des Grünlings wird eine Bohrungsgeometrie mit einem sinusförmigen Profil 6 in Umfangsrichtung erzeugt. Die Bohrungsgeometrie mit dem sinusförmigen Profil in Umfangsrichtung erlaubt es, daß nach dem nicht dargestellten Sinterprozeß über den Kalibriervorgang eine kreisrunde Bohrungsgeometrie der Lagerbohrung 14 mit unterschiedlich verdichteten Bereichen 9, 10 erzeugt wird, indem die Lagerbohrung 14 mit dem sinusförmigen Profil 6 mittels eines kreisrunden Kalibrierdorns kalibriert wird, so daß in dem Sintergleitlager 5 eine kreisrunde Lagerbohrung 14 gemäß Fig. 3 erzeugt wird. Der Grad der Verdichtung der hochverdichteten Bereiche 9 kann über die Maßauslegung der Formwerkzeuge, wie beispielsweise Oberstempel 19 und Formdorn 21, eingestellt werden. Eine axiale Variation der Verdichtung der Lagerbohrung 14 des Sintergleitlagers 5 gemäß Fig. 5 oder Fig. 6 wird durch zwei gegeneinander versetzte Formdorne 21 und Stempel 19 in die Bohrung eingebracht.

Erfindungsgemäß wird ein Grünling mittels eines Preßwerkzeuges gepreßt, wobei der Formdorn 21 und die Formstempel 18, 19 eine Geometrie mit einem Sinusprofil 6 in Umfangsrichtung aufweisen. Sofern die Verdichtung in der Lagerbohrung 14 auch in axialer Richtung variieren soll, werden zwei gegeneinander versetzte Formdorne 21 und Stempel 18, 19 verwendet. Die Lagerbohrung 14 mit dem sinusartigen Profil 6 in Umfangsrichtung wird mit einem kreisrunden Kalibrierdorn zur Erzeugung enger Toleranzen kalibriert, wodurch die glatte Lauffläche und die teilweise hochverdichteten Bereiche 9 der Lagerbohrung 14 erzeugt werden. Abschließend wird das Lager 5 unter Vakuum mit Schmierstoffen getränkt.

Die erfindungsgemäßen Sintergleitlager 5 können für die gleichen Einsatzzwecke verwendet werden, wie die aus dem Stand der Technik bekannten Sintergleitlager. Insbesondere können sie für alle Art von Elektromotoren eingesetzt werden, wobei niedriger viskose Öle eingesetzt werden können, wodurch das Verhalten bei "Kaltstart" eines Motors verbessert wird. Die erfindungsgemäßen Sintergleitlager laufen schon bei niedrigeren Drehzahlen im hydrodynamischen Bereich und durch die zumindest annähernd kreisrunde Lagerbohrung wird ein Abreißen des Schmierfilms an Kanten von Schmierstoffdepots vermieden.

## Patentansprüche

1. Sintergleitlager (5) für Motoren und Getriebe mit einer kreisrunden Lagerbohrung (14), bei dem die Lagerbohrung (14) über den Umfang verteilt abwechselnd hoch verdichtete zumindest annähernd geschlossenporige Bereiche (9) und niedrig verdichtete, offenporige Bereiche (10) aufweist, wobei der Lagerbohrungsdurchmesser der hoch und niedrig verdichteten Bereiche (9, 10) zumindest annähernd identisch ist, wobei die Dichte über den Umfang der Lagerbohrung zwischen den hoch und niedrig verdichteten Bereichen (9, 10) zumindest annähernd kontinuierlich variiert ist.

2. Sintergleitlager (5) nach Anspruch 1, **dadurch gekennzeichnet, daß** der Lagerbohrungsdurchmesser der hoch und niedrig verdichteten Bereiche (9, 10) identisch ist.

3. Sintergleitlager (5) nach einem der Ansprüche 1 oder 2, **dadurch gekennzeichnet, daß** das Sintergleitlager (5) wenigsten zwei hoch verdichtete zumindest annähernd geschlossenporige Bereiche (9, 10) aufweist.

4. Sintergleitlager (5) nach einem der Ansprüche 1 bis 3, **dadurch gekennzeichnet, daß** die Lagerbohrung (14) zumindest über einen Teil der Lagerbreite (b) hoch verdichtete zumindest annähernd geschlossenporige Bereiche (9) und/oder niedrig verdichtete, offenporige Bereiche (10) aufweist.

5. Sintergleitlager (5) nach einem der Ansprüche 1 bis 4, **dadurch gekennzeichnet, daß** die Lagerbohrung (14) zumindest über die halbe Lagerbreite (b) hoch verdichtete zumindest annähernd geschlossenporige Bereiche (9) und/oder niedrig verdichtete, offenporige Bereiche (10) aufweist.

6. Sintergleitlager (5) nach Anspruch 5, **dadurch gekennzeichnet, daß** die hoch verdichteten zumindest annähernd geschlossenporigen Bereichen (9) und die niedrig verdichteten, offenporigen Bereiche (10) gegeneinander versetzt angeordnet sind.

7. Sintergleitlager (5) nach einem der Ansprüche 1 bis 6, **dadurch gekennzeichnet, daß** jeweils einem hoch verdichteten zumindest annähernd geschlossenporigenBereich (9) ein niedrig verdichteter, offenporiger Bereich (10) axial gegenüberliegend zugeordnet ist.

8. Verfahren zur Herstellung eines Sintergleitlagers (5) **dadurch gekennzeichnet, daß** Pulver in ein Werkzeug eingefüllt wird, ein Grünling mit einer Bohrung mit einem annähernden Sinusprofil in Umfangsrichtung mittels Pressen erzeugt wird, der Grünling gesintert wird und abschließend das annähernde Sinusprofil der Bohrung mittels Kalibrieren zu einer kreisrunden Bohrungsgeometrie geformt wird, wobei die Dichte über den Umfang der Lagerbohrung zwischen den hoch und niedrig verdichteten Bereichen (9, 10) zumindest annähernd kontinuierlich variiert wird.

9. Verfahren zur Herstellung eines Sintergleitlagers (5), **dadurch gekennzeichnet, daß** Pulver in ein Werkzeug eingefüllt wird, ein Grünling mit einer Bohrung mit einem annähernden Sinusprofil in Umfangsrichtung mittels Pressen erzeugt wird, wobei auf jeder Hälfte des Lagers ein um einen Winkel gegen das andere Sinusprofil versetztes Sinusprofil gepreßt wird, der Grünling gesintert wird und abschließend das annähernde Sinusprofil der Bohrung mittels Kalibrieren zu einer kreisrunden Bohrungsgeometrie geformt wird,wobei die Dichte über den Umfang der Lagerbohrung zwischen den hoch und niedrig verdichteten Bereichen (9, 10) zumindest annähernd kontinuierlich variiert wird.

10. Verfahren zur Herstellung eines Sintergleitlagers (5) nach einem der Ansprüche 8 oder 9, **dadurch gekennzeichnet, daß** das Pulver in den niedrig verdichteten Bereichen (10) annähernd auf die Grunddichte des Sintergleitlagers (5) verdichtet wird und in den hoch verdichteten Bereichen (9) annähernd auf die Dichte des Lagerwerkstoffes.

11. Verfahren zur Herstellung eines Sintergleitlagers (5) nach einem der Ansprüche 9 bis 10, **dadurch gekennzeichnet, daß** das Pulver in radialer Richtung um 100 bis 300 µm verdichtet wird.

12. Vorrichtung zur Herstellung eines Sintergleitlagers (5) und zur Durchführung des Verfahrens nach einem der Ansprüche 8 bis 11, wobei ein Preßwerkzeug vorgesehen ist, das aus einer Matrize und einem auf dem Außenumfang profilierten Formdorn (21) besteht, dem ein Ober- (19) und ein Unterstempel (18) mit einem identischen Profil zugeordnet ist, wobei die Profilierung des Formdorns (21) und des Stempels (18, 19) ein Sinusprofil in Umfangsrichtung ist.

13. Vorrichtung zur Herstellung eines Sintergleitlagers (5) und zur Durchführung des Verfahrens nach Anspruch 12, wobei ein Preßwerkzeug vorgesehen ist, das aus einer Matrize (16) und einem auf dem Außenumfang profilierten oberen und unteren Formdorn besteht, denen ein Ober- und ein Unterstempel (19, 18) mit einem identischen Profil zugeordnet sind, wobei die Profilierung ein Sinusprofil in Umfangsrichtung ist und der obere Formdorn und der Oberstempel um einen Winkel gedreht gegenüber dem unteren Formdorn und dem Unterstempel angeordnet sind.

## Claims

1. A porous plain bearing (5) for engines and transmissions, with a circular bearing bore (14), in which the bearing bore (14) has, distributed over the periphery, alternately highly compacted at least approximately closed-pore regions (9) and slightly compacted, open-pore regions (10), the bearing bore diameter of the highly and slightly compacted regions (9, 10) being at least approximately identical, the compactness over the periphery of the bearing bore between the highly and slightly compacted regions (9, 10) being at least approximately continuously varied.

2. A porous plain bearing (5) according to Claim 1, **characterised in that** the bearing bore diameter of the highly and slightly compacted regions (9, 10) is identical.

3. A porous plain bearing (5) according to one of Claims 1 or 2, **characterised in that** the porous plain bearing (5) comprises at least two highly compacted, at least approximately closed-pore regions (9, 10).

4. A porous plain bearing (5) according to one of Claims 1 to 3, **characterised in that** the bearing bore (14) has at least over part of the bearing width (b) highly compacted, at least approximately closed-pore regions (9) and/or slightly compacted, open-pore regions (10).

5. A porous plain bearing (5) according to one of Claims 1 to 4, **characterised in that** the bearing bore (14) has at least over half the bearing width (b) highly compacted, at least approximately closed-pore regions (9) and/or slightly compacted, open-pore regions (10).

6. A porous plain bearing (5) according to Claim 5, **characterised in that** the highly compacted, at least approximately closed-pore regions (9) and the slightly compacted, open-pore regions (10) are arranged offset relative to one another.

7. A porous plain bearing (5) according to one of Claims 1 to 6, **characterised in that** in each case a slightly compacted, open-pore region (10) is associated with and axially facing a highly compacted, at least approximately closed-pore region (9).

8. A method of manufacturing a porous plain bearing (5), **characterised in that** powder is poured into a die, a green compact with a bore having an approximately sinusoidal profile in the peripheral direction is produced by compression, the green compact is sintered and finally the approximately sinusoidal profile of the bore is shaped into a circular bore geometry by means of sizing, the compactness over the periphery of the bearing bore being varied at least approximately continuously between the highly and slightly compacted regions (9, 10).

9. A method of manufacturing a porous plain bearing (5), **characterised in that** powder is poured into a die, a green compact with a bore having an approximately sinusoidal profile in the peripheral direction is produced by compaction, with a sinusoidal profile which is offset by an angle relative to the other sinusoidal profile being compressed on each half of the bearing, the green compact is sintered and finally the approximate sinusoidal profile of the bore is shaped into a circular bore geometry by means of sizing, the compactness over the periphery of the bearing bore being varied at least approximately continuously between the highly and slightly compacted regions (9, 10).

10. A method of manufacturing a porous plain bearing (5) according to one of Claims 8 or 9, **characterised in that** the powder in the slightly compacted regions (10) is compacted approximately to the basic compactness of the porous plain bearing (5) and in the highly compacted regions (9) approximately to the compactness of the bearing material.

11. A method of manufacturing a porous plain bearing (5) according to one of Claims 9 to 10, **characterised in that** the powder is compacted by 100 to 300 µm in the radial direction.

12. A device for manufacturing a porous plain bearing (5) and for performing the method according to one of Claims 8 to 11, wherein a pressing tool is provided which consists of a female die and a forming mandrel (21) which is profiled on the outer periphery, with which an upper (19) and a lower male die (18) with an identical profile is associated, the profiling of the forming mandrel (21) and of the male die (18, 19) being a sinusoidal profile in the peripheral direction.

13. A device for manufacturing a porous plain bearing (5) and for performing the method according to Claim 12, with a pressing tool being provided which consists of a female die (16) and an upper and lower forming mandrel which is profiled on the outer periphery, with which mandrels an upper and a lower male die (19, 18) with an identical profile are associated, the profiling being a sinusoidal profile in the peripheral direction and the upper forming mandrel and the upper male die being arranged rotated by an angle relative to the lower forming mandrel and the lower male die.

## Revendications

1. Palier lisse fritté (5) pour moteurs et engrenages, comprenant un alésage de palier circulaire (14), dans lequel l'alésage de palier (14) présente, de manière répartie en alternance sur la périphérie, des zones au moins approximativement à pores fermés à haute compression (9) et des zones à pores ouverts à faible compression (10), le diamètre de l'alésage de palier des zones à haute et à faible compression (9, 10) étant au moins approximativement identique, la densité variant au moins approximativement de façon continue sur la périphérie de l'alésage de palier entre les zones à haute et à faible compression (9, 10).

2. Palier lisse fritté (5) selon la revendication 1, **caractérisé en ce que** le diamètre de l'alésage de palier des zones à haute et à faible compression (9, 10) est identique.

3. Palier lisse fritté (5) selon l'une des revendications 1 ou 2, **caractérisé en ce que** le palier lisse fritté (5) présente au moins deux zones au moins approximativement à pores fermés à haute compression (9, 10).

4. Palier lisse fritté (5) selon l'une des revendications 1 à 3, **caractérisé en ce que** l'alésage de palier (14) présente, au moins sur une partie de la largeur de palier (b), des zones au moins approximativement à pores fermés à haute compression (9) et/ou des zones à pores ouverts à faible compression (10) .

5. Palier lisse fritté (5) selon l'une des revendications 1 à 4, **caractérisé en ce que** l'alésage de palier (14) présente, au moins sur la moitié de la largeur de palier (b), des zones au moins approximativement à pores fermés à haute compression (9) et/ou des zones à pores ouverts à faible compression (10).

6. Palier lisse fritté (5) selon la revendication 5, **caractérisé en ce que** les zones au moins approximativement à pores fermés à haute compression (9) et les zones à pores ouverts à faible compression (10) sont disposées de manière décalée les unes par rapport aux autres.

7. Palier lisse fritté (5) selon l'une des revendications 1 à 6, **caractérisé en ce qu'**une zone à pores ouverts à faible compression (10) est respectivement associée de manière axialement opposée à une zone au moins approximativement à pores fermés à haute compression (9).

8. Procédé de fabrication d'un palier lisse fritté (5), **caractérisé en ce qu'**un outil est rempli de poudre, un comprimé non fritté comportant un alésage ayant un profil sinusoïdal approximatif dans la direction périphérique est formé par pressage, le comprimé non fritté est fritté, puis le profil sinusoïdal approximatif de l'alésage est formé par calibrage pour obtenir une géométrie d'alésage circulaire, la densité variant au moins approximativement de façon continue sur la périphérie de l'alésage de palier entre les zones à haute et à faible compression (9, 10).

9. Procédé de fabrication d'un palier lisse fritté (5), **caractérisé en ce qu'**un outil est rempli de poudre, un comprimé non fritté comportant un alésage ayant un profil sinusoïdal approximatif dans la direction périphérique est formé par pressage, un autre profil sinusoïdal décalé d'un certain angle par rapport au profil sinusoïdal étant pressé sur chaque moitié du palier, le comprimé non fritté est fritté, puis le profil sinusoïdal approximatif de l'alésage est formé par calibrage pour obtenir une géométrie d'alésage circulaire, la densité variant au moins approximativement de façon continue sur la périphérie de l'alésage de palier entre les zones à haute et à faible compression (9, 10).

10. Procédé de fabrication d'un palier lisse fritté (5) selon l'une des revendications 8 ou 9, **caractérisé en ce que** la poudre est compressée, dans les zones à faible compression (10), approximativement jusqu'à la densité de base du palier lisse fritté (5) et dans les zones à haute compression (9), approximativement jusqu'à la densité du matériau du palier.

11. Procédé de fabrication d'un palier lisse fritté (5) selon l'une des revendications 9 à 10, **caractérisé en ce que** la poudre est compressée en direction radiale de 100 à 300 µm.

12. Dispositif permettant de fabriquer un palier lisse fritté (5) et permettant de mettre en oeuvre le procédé selon l'une des revendications 8 à 11, dans lequel on prévoit outil de processus constitué d'une matrice et d'un mandrin de formage (21) profilé sur la périphérie extérieure, auquel sont associés un poinçon supérieur (19) et un poinçon inférieur (18) ayant un profil identique, le profil du mandrin de formage (21) et du poinçon (18, 19) étant un profil sinusoïdal dans la direction périphérique.

13. Dispositif permettant de fabriquer un palier lisse fritté (5) et permettant de mettre en oeuvre le procédé selon la revendication 12, dans lequel on prévoit un outil de pressage constitué d'une matrice (16) et d'un mandrin de formage supérieur et inférieur profilés sur la périphérie extérieure, auxquels sont associés un poinçon supérieur et inférieur (19, 18) ayant un profil identique, le profil étant un profil sinusoïdal dans la direction périphérique et le mandrin de formage supérieur et le poinçon supérieur étant disposés de manière à être tournés d'un certain angle par rapport au mandrin inférieur et au poinçon inférieur.
